# FASCICULE DE BREVET EUROPEEN

(11) **EP 2 998 808 B1**
(45) Date de publication et mention de la délivrance du brevet: **28.07.2021**
(21) Numéro de dépôt: 15184101.2
(22) Date de dépôt: 07.09.2015
(51) Int. Cl.: G05B 19/05, G05B 9/03

(54) **MODULE D'ENTRÉES POUR AUTOMATE PROGRAMMABLE INDUSTRIEL**
MODUL FÜR DIE EINGÄNGE EINER SPEICHERPROGRAMMIERBAREN STEUERUNG
INPUT MODULE FOR PROGRAMMABLE LOGIC CONTROLLER

(30) Priorité: 16.09.2014 FR 1458711
(43) Date de publication de la demande: 23.03.2016
(73) Titulaire: Schneider Electric Industries SAS, 92500 Rueil-Malmaison (FR)
(72) Inventeur: GOMEZ, Gérard, 38050 GRENOBLE Cedex 09 (FR); CHAPIER, Pascal, 38050 GRENOBLE Cedex 09 (FR)
(74) Mandataire: Lavoix

(56) Documents cités:
- US-A- 4 593 380
- US-A- 5 263 170
- US-A1- 2004 010 324
- US-A1- 2011 178 612
- None

## Description

La présente invention concerne un module d'entrées pour automate programmable industriel, un automate comportant un tel module et un procédé de test d'un tel module.

Un automate programmable industriel, noté automate dans la suite de la description, est un équipement d'automatisme propre à piloter, commander et/ou surveiller un ou plusieurs processus. Un tel automate est souvent désigné par l'acronyme API ou PLC pour le terme anglais « programmable logic controller »). A titre d'exemple, l'automate permet d'assurer la commande des machines sur une ligne de montage dans une usine ou le pilotage de systèmes de manutention automatique

L'automate est généralement construit sur une architecture de type modulaire. Aussi, l'automate comprend différents modules. En particulier, l'automate comporte un module de communication propre à assurer l'échange de données entre les autres modules de l'automate. Ce module de communication constitue ainsi un bus de transmission usuellement appelé bus « fond de panier » (ou, selon la terminologie anglaise, bus « backplane »).

Le nombre de modules de l'automate dépend des besoins du ou des processus à automatiser. Typiquement, l'automate comporte un module d'alimentation, une unité centrale, des modules de traitement et des modules d'entrées.

Le module d'alimentation fournit, via le module de communication, l'énergie électrique permettant d'assurer le fonctionnement des autres modules de l'automate.

L'unité centrale est une unité de calcul ou un processeur usuellement désignée par l'acronyme anglais CPU pour « central processing unit » (unité de traitement centrale). L'unité centrale est un module comportant un logiciel embarqué comprenant les instructions à exécuter par le logiciel embarqué pour effectuer les opérations d'automatisme souhaitées. L'unité centrale comprend aussi généralement une connexion face avant vers des outils de programmation de type ordinateur personnel.

Chaque module de traitement est propre à traiter des données.

Chaque module d'entrées permet d'assurer un interfaçage sécurisé entre l'unité centrale et des éléments interagissant avec l'automate. A titre d'illustration, de tels éléments sont des capteurs, des boutons poussoirs, des actionneurs, des voyants, des vannes. Cette diversité implique qu'un automate comprend usuellement plusieurs modules d'entrées, certains modules d'entrées étant numériques, d'autres modules d'entrées étant analogiques.

Pour assurer un interfaçage sécurisé et plus généralement la sécurité ainsi que le bon fonctionnement de l'automate, chaque module d'entrées est propre à détecter une anomalie de fonctionnement. Selon les cas, une anomalie de fonctionnement survient en cas de dysfonctionnement de l'élément interagissant avec l'automate, de la liaison entre l'élément et l'automate ou du module d'entrées.

Pour détecter la présence d'une telle anomalie, il est connu de munir chaque module d'entrées d'au moins deux interfaces identiques par entrée, la sortie des deux interfaces étant reliées à un comparateur propre à comparer les signaux des sorties. En l'absence d'anomalie de fonctionnement, le comparateur ne détecte aucune différence entre les deux signaux puisque les deux interfaces sont identiques. Lorsque le comparateur détecte une différence significative entre les deux signaux de sortie, cela signifie qu'un dysfonctionnement a lieu. Des interrupteurs dans le circuit de chaque interface permettent d'effectuer une séquence de test des interfaces pour déterminer si le dysfonctionnement provient du module d'entrées ou d'un élément extérieur au module d'entrées. En outre, pour éviter les cas de panne des interfaces conduisant à un signal identique sur les deux signaux de sortie, il convient d'effectuer la séquence de test périodiquement pour garantir que le fonctionnement est normal. Lorsque cette séquence de test est effectuée, aucune des deux interfaces testées n'assure la transmission du signal lorsque les deux interfaces sont testées simultanément. De ce fait, il est souvent choisi d'utiliser un module d'entrées présentant trois interfaces identiques par entrée.

Toutefois, de tels modules sont encombrants.

Il existe donc un besoin pour un module d'entrées pour automate programmable industriel présentant un encombrement réduit tout en garantissant un bon niveau de sécurité pour l'automate programmable industriel.

Le document US2004/010324 décrit un module d'interface de composant de centrale nucléaire, doté d'un processeur non logiciel pour arbitrer les signaux de commande de composant et pour intégrer des signaux de commande avec des signaux de retour de composant pour générer un signal de commande de composant.

Le document US4593380 fournit des circuits qui peuvent être actionnés sélectivement soit en tant que point d'entrée, soit en tant que point de sortie dans un contrôleur programmable ayant plusieurs points d'entrée et de sortie pour échanger des signaux entre une unité centrale de traitement (CPU) du contrôleur et un processus contrôlé.

Pour cela, il est proposé un module d'entrées pour automate programmable industriel propre à être relié à une pluralité d'éléments d'une chaîne automatisée, le module d'entrées comprenant des entrées, chaque entrée étant propre à recevoir un signal issu d'au moins un élément de la pluralité d'éléments. Le module d'entrées comprend des interfaces, chaque interface étant associée à une seule entrée et comprenant au moins une sortie propre à fonctionner selon trois états distincts : un état de forçage correspondant à la tension maximale que la sortie de l'interface est propre à délivrer, un état bas correspondant à la tension minimale que la sortie de l'interface est propre à délivrer, et un état de lecture dans lequel la sortie de l'interface est propre à délivrer une image du signal reçu par l'entrée associée à l'interface considérée. Le module d'entrée comprend également un bloc de test relié à chacune des interfaces et propre à imposer l'état de la sortie de chaque interface, et un sous-module de traitement propre à comparer l'état de la sortie de chaque interface avec l'état imposé par le bloc de test et à en déduire une anomalie de fonctionnement du module d'entrées lorsque l'état de la sortie d'au moins une interface diffère de l'état imposé par le bloc de test.

Suivant des modes de réalisation particuliers, le module d'entrées comprend une ou plusieurs des caractéristiques suivantes, prise(s) isolément ou suivant toute combinaison techniquement possible :
- chaque interface comprend des composants ayant un mode de défaillance connu, de préférence chaque composant étant uniquement choisi parmi le groupe constitué d'une résistance, d'un transistor et d'une diode.
- chaque interface est identique.
- chaque interface comporte un unique transistor propre à modifier l'état de la sortie de l'interface.
- le module d'entrées comporte en outre une partie d'isolation isolant le sous-module de traitement des interfaces et du bloc de test.
- le module d'entrées comporte, en outre, une alimentation spécifique au bloc de test.
- le sous-module de traitement est propre à déterminer une anomalie de fonctionnement d'au moins l'un des éléments du groupe constitué des deux interfaces, du bloc de test et de la partie d'isolation lorsque l'état de la sortie d'au moins une interface diffère de l'état de forçage alors que l'état imposé par le bloc de test est l'état de forçage, une absence d'anomalie de fonctionnement lorsque le bloc de test n'est pas alimenté, et une anomalie de fonctionnement d'au moins l'un des éléments du groupe constitué des interfaces et du bloc de test lorsque l'état de la sortie d'au moins une interface diffère de l'état bas alors que l'état imposé par le bloc de test est l'état bas.
- le sous-module de traitement est propre à imposer de manière cyclique l'état de forçage, l'état bas puis l'état de lecture à chaque sortie de chaque interface.

L'invention concerne aussi un automate programmable industriel comportant au moins un module d'entrées tel que précédemment précité.

L'invention concerne aussi un procédé de test d'un module d'entrées pour automate programmable industriel propre à être relié à une pluralité d'éléments d'une chaîne automatisée, le module d'entrées comprenant des entrées, chaque entrée étant propre à recevoir un signal issu d'au moins un élément de la pluralité d'éléments. Le module d'entrées comprend des interfaces, chaque interface étant associée à une seule entrée et comprenant au moins une sortie propre à fonctionner selon trois états distincts un état de forçage correspondant à la tension maximale que la sortie de l'interface est propre à délivrer, un état bas correspondant à la tension minimale que la sortie de l'interface est propre à délivrer, et un état de lecture dans lequel la sortie de l'interface est propre à délivrer une image du signal reçu par l'entrée associée à l'interface considérée. Le module d'entrées comprend un bloc de test relié à chacune des interfaces et propre à imposer l'état de la sortie de chaque interface, et un sous-module de traitement propre à comparer l'état de la sortie de chaque interface avec l'état imposé par le bloc de test et à en déduire une anomalie de fonctionnement du module d'entrées lorsque l'état de la sortie d'au moins une interface diffère de l'état imposé par le bloc de test. Le procédé comprenant les étapes d'imposer un état de forçage à chaque sortie de chaque interface, de vérification de l'état de fonctionnement du module d'entrées lorsqu'un état de forçage est imposé à chaque sortie de chaque interface, d'imposer un état bas à chaque sortie de chaque interface, de vérification de l'état de fonctionnement du module d'entrées et de déduction de l'état de fonctionnement du module d'entrées en fonction des résultats des étapes de vérification.

D'autres caractéristiques et avantages de l'invention apparaîtront à la lecture de la description qui suit de modes de réalisation de l'invention, donnée à titre d'exemple uniquement et en référence aux dessins qui sont :
- figure 1, un schéma d'un exemple d'automate en interaction avec une pluralité d'éléments, et
- figure 2, un schéma d'un module d'entrées de l'automate de la figure 1.

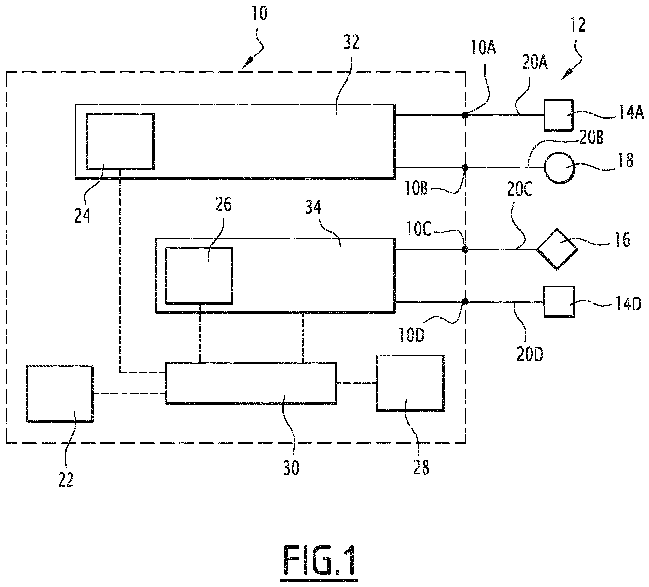

Tel que représenté à la figure 1, il est proposé un automate 10 en interaction avec une pluralité d'éléments 12 faisant partie d'une chaîne automatisée.

Parmi les éléments 12 de la chaîne automatisée, par simplification, seuls huit sont représentés sur la figure 1, sachant qu'en pratique, le nombre d'éléments 12 dépend du processus que permet d'automatiser l'automate 10. Dans des processus complexes, le nombre d'éléments est souvent supérieur à cent.

Dans le cas de la figure 1, deux capteurs 14A, 14D un actionneur 16 et un bouton d'arrêt d'urgence 18 sont représentés. Les deux capteurs 14A, 14D, l'actionneur 16 et le bouton d'arrêt d'urgence 18 sont reliés par un câble 20A, 20D, 20C, 20B respectif à l'automate 10.

L'automate 10 est un automate programmable industriel.

L'automate 10 comporte des entrées/sorties 10A, 10B, 10C et 10D, un module d'alimentation 22, une unité centrale 28, un module de communication 30 et un premier module d'entrées 32 comprenant un premier sous-module de traitement 24 et un deuxième module d'entrées/sorties 34 comprenant un deuxième sous-module de traitement 26.

La première entrée 10A est reliée au premier capteur 14A via le premier câble 20A.

La deuxième entrée 10B est reliée au bouton d'arrêt d'urgence 18 via le deuxième câble 20B.

La troisième sortie 10C est reliée à l'actionneur 16 via le troisième câble 20C.

La quatrième entrée 10D est reliée au deuxième capteur 14D via le quatrième câble 20D.

Le module d'alimentation 22 fournit, via le module de communication 30, l'énergie électrique permettant d'assurer le fonctionnement des autres modules 28, 30, 32, 34 de l'automate 10.

Le premier sous-module de traitement 24 est propre à traiter les données issues du premier module d'entrées 32. A titre d'exemple, le premier module de traitement 24 est propre à effectuer un filtrage des données.

Similairement, le sous-deuxième module de traitement 26 est propre à traiter les données issues du deuxième module d'entrées 34.

L'unité centrale 28 est propre à collecter des données traitées par les sous-modules de traitement 24 et 26 et à prendre et mettre en œuvre des décisions en fonction des données traitées.

Le module de communication 30 est propre à assurer les communications de données entre les différents modules 22, 28, 32 et 34 de l'automate 10. Cela est indiqué sur la figure 1 par des traits en pointillés.

Le premier module d'entrées 32 est relié aux deux premières entrées 10A et 10B de l'automate 10. Le premier module d'entrées 32 est relié au premier module de traitement 24 et est propre à assurer un interfaçage sécurisé entre le premier module de traitement 24 et le capteur 14A et le bouton d'arrêt d'urgence 18 reliés respectivement aux entrées 10A et 10B.

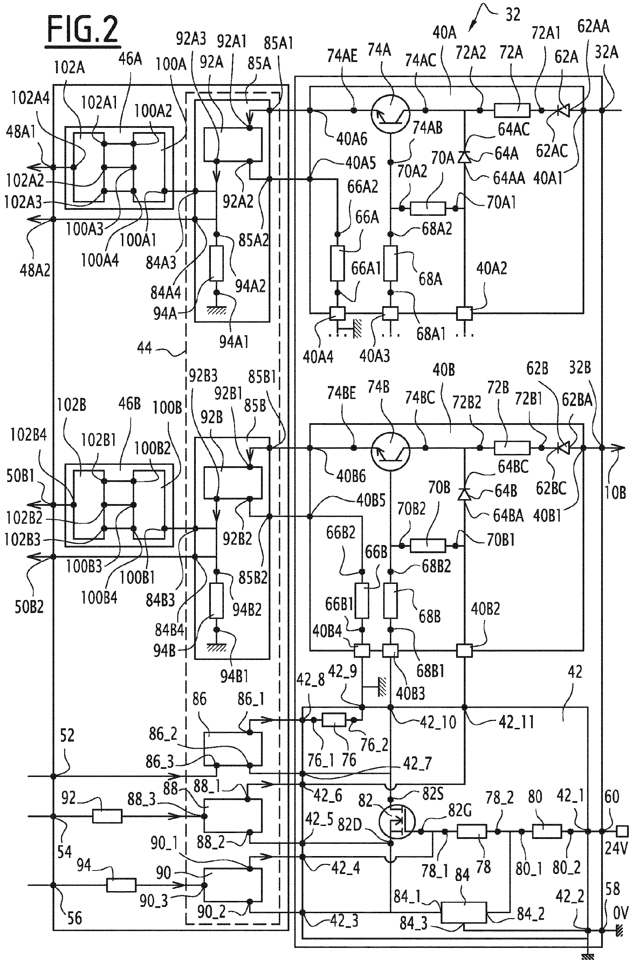

Un exemple de schéma électrique pour le premier module d'entrées 32 est visible à la figure 2.

Le premier module d'entrées 32 comprend deux entrées 32A, 32B, une première interface 40A, une deuxième interface 40B, un bloc de test 42, une partie d'isolation 44, un premier bloc de diagnostic 46A, un deuxième bloc de diagnostic 46B, quatre commandes de test des interfaces 40A et 40B qui sont quatre sorties 48A1, 48A2, 50B1 et 50B2 et cinq entrées 52, 54, 56, 58 et 60.

La première entrée 32A du premier module d'entrées 32 est reliée à la première entrée 10A de l'automate 10.

La deuxième entrée 32B du premier module d'entrées 32 est reliée à la deuxième entrée 10B de l'automate 10.

La première interface 40A comporte deux diodes 62A, 64A, quatre résistances 66A, 68A, 70A, 72A, un transistor 74A et six bornes 40A1, 40A2, 40A3, 40A4, 40A5 et 40A6.

La première diode 62A comporte une anode 62AA et une cathode 62AC.

La deuxième diode 64A comporte une anode 64AA et une cathode 64AC.

La première résistance 66A comporte une première borne 66A1 et une deuxième borne 66A2.

La deuxième résistance 68A comporte une première borne 68A1 et une deuxième borne 68A2.

La troisième résistance 70A comporte une première borne 70A1 et une deuxième borne 70A2.

La quatrième résistance 72A comporte une première borne 72A1 et une deuxième borne 72A2.

Le transistor 74A est, selon l'exemple de la figure 2, un transistor bipolaire PNP comportant trois électrodes : une base 74AB, un collecteur 74AC et un émetteur 74AE.

L'anode 62AA de la première diode 62A est reliée à la première borne 40A1 de la première interface 40A. La cathode 62AC de la première diode 62A est reliée à la première borne 72A1 de la quatrième résistance 72A.

L'anode 64AA de la deuxième diode 64A est reliée d'une part à la deuxième borne 40A2 de la première interface 40A et d'autre part à la première borne 70A1 de la troisième résistance 70A. La cathode 64AC de la deuxième diode 64A est reliée à la deuxième borne 72A2 de la quatrième résistance 72A et au collecteur 74AC du transistor 74A.

La première borne 66A1 de la première résistance 66A est reliée à la quatrième borne 40A4 de la première interface 40A tandis que la deuxième borne 66A2 de la première résistance 66A est reliée à la cinquième borne 40A5 de la première interface 40A.

La première borne 68A1 de la deuxième résistance 68A est reliée à la troisième borne 40A3 de la première interface 40A. La deuxième borne 68A2 de la deuxième résistance 68A est reliée à la base 74AB du transistor 74A et à la deuxième borne 70A2 de la troisième résistance 70A.

La première borne 70A1 de la troisième résistance 70A est reliée à la deuxième borne 40A2 de la première interface 40A et à l'anode 64AA de la deuxième diode 64A. La deuxième borne 70A2 de la troisième résistance 70A est reliée à la base 74AB du transistor 74A et à la deuxième borne 68A2 de la deuxième résistance 68A.

La première borne 72A1 de la quatrième résistance 72A est reliée à la cathode 62AC de la première diode 62A. La deuxième borne 72A2 de la quatrième résistance 72A est reliée à la cathode 64AC de la deuxième diode 64A et au collecteur 74AC du transistor 74A.

La base 74AB du transistor 74A est reliée à la deuxième borne 68A2 de la deuxième résistance 68A et à la deuxième borne 70A2 de la troisième résistance 70A. L'émetteur 74AE du transistor 74A est relié à la sixième borne 40A6 de la première interface 40A. Le collecteur 74AC du transistor 74A est relié à la cathode 64AC de la deuxième diode 64A et à la deuxième borne 72A de la quatrième résistance 72A.

La première borne 40A1 de la première interface 40A est reliée à la première entrée 32A du premier module d'entrées 32.

Les deuxième borne 40A2, troisième borne 40A3 et quatrième borne 40A4 de la première interface 40A sont reliées au bloc de test 42. Dans un souci de simplification, les connexions associées ne sont pas visibles sur la figure 2. Des points symbolisent l'existence de telles connexions. En outre, la quatrième borne 40A4 de la première interface 40A est reliée à la masse.

Les cinquième borne 40A5 et sixième borne 40A6 de la première interface 40A sont reliées à la partie d'isolation 44.

Il est à noter que la sixième borne 40A6 de la première interface 40A est une sortie propre à fonctionner selon trois états distincts : un état de forçage, un état bas et un état de lecture. Dans l'état de forçage, la sixième borne 40A6 de la première interface 40A est propre à délivrer une tension de forçage délivrée par le bloc de test 42 (par exemple 5V dans le cas particulier de la figure 2, la tension de forçage correspondant le plus souvent à la tension maximale que le bloc de test 42 est susceptible de délivrer), de l'état bas, la sixième borne 40A6 de la première interface 40A est propre à délivrer une tension minimale (usuellement 0V) et dans l'état de lecture, la sixième borne 40A6 de la première interface 40A est propre à délivrer une image du signal reçu par la première entrée ou à recevoir le signal de commande du premier capteur 14A, c'est-à-dire le courant délivré par le premier capteur 14A.

La deuxième interface 40B est similaire à la première interface 40A mais interagit avec le deuxième capteur 14B au lieu du premier capteur 14A. Les mêmes remarques que précédemment s'appliquent donc pour la deuxième interface 40B en remplaçant la lettre A par la lettre B dans le signe de référence lorsque cela est pertinent.

Le bloc de test 42 comporte trois résistances 76, 78, 80, un transistor 82, un régulateur de tension 84 et onze bornes 42_1, 42_2, 42_3, 42_4, 42_5, 42_6, 42_7, 42_8, 42 9, 42_10 et 42_11.

La première résistance 76 du bloc de test 42 comporte une première borne 76_1 et une deuxième borne 76_2.

La deuxième résistance 78 du bloc de test 42 comporte une première borne 78_1 et une deuxième borne 78_2.

La troisième résistance 80 du bloc de test 42 comporte une première borne 80_1 et une deuxième borne 80_2.

Le transistor 82 du bloc de test 42 est, selon l'exemple de la figure 2, un transistor à effet de champ comportant trois électrodes : une grille 82G, un drain 82D et une source 82S.

Le transistor 82 permet de connecter la tension de référence du régulateur de tension 84 aux interfaces 40A et 40B pour limiter le courant circulant dans chacune des interfaces en mode lecture. Le transistor 82 permet également de déconnecter la référence de tension du régulateur de tension 84 par rapport aux interfaces 40A et 40B pour positionner ces interfaces 40A et 40B à l'état bas.

Le régulateur de tension 84 comporte une première borne 84_1, une deuxième borne 84_2 et une troisième borne 84_3. La première borne 84_1 correspond à la sortie, la deuxième borne 84_2 à l'entrée et la troisième borne 84_3 au 0V.

Le régulateur de tension 84 est propre à fournir une tension de référence aux interfaces 40A et 40B pour limiter le courant circulant au travers de l'interface en mode lecture. Le régulateur est également propre à fournir la tension de forçage pour les interfaces 40A et 40B en mode de forçage. Par exemple, dans un tel mode de forçage, le régulateur de tension est propre à fournir une tension de 5 V.

La première borne 76_1 de la première résistance 76 du bloc de test 42 est reliée à la huitième borne 42_8 du bloc de test 42. La deuxième borne 76_2 de la première résistance 76 du bloc de test 42 est reliée à la neuvième borne 42_9 du bloc de test 42.

La première borne 78_1 de la deuxième résistance 78 du bloc de test 42 est reliée à la quatrième borne 42_4 du bloc de test 42 et à la grille 82G du transistor 82 du bloc de test 42. La deuxième borne 78_2 de la deuxième résistance 78 du bloc de test 42 est reliée à la deuxième borne 84_2 du régulateur de tension 84 et à la première borne 80_1 de la troisième résistance 80 du bloc de test 42.

La première borne 80_1 de la troisième résistance 80 du bloc de test 42 est reliée à la deuxième borne 78_2 de la deuxième résistance 78 du bloc de test 42 et à la deuxième borne 84_2 du régulateur de tension 84. La deuxième borne 80_2 de la troisième résistance 80 du bloc de test 42 est reliée à la première borne 42_1 du bloc de test 42.

La grille 82G du transistor 82 du bloc de test 42 est reliée à la quatrième borne 42_4 du bloc de test 42 et à la première borne 78_1 de la deuxième résistance 78 du bloc de test 42. Le drain 82D du transistor 82 du bloc de test 42 est relié à la cinquième borne 42_5 du bloc de test 42 et à la première borne 84_1 du régulateur de tension 84. La source 82S du transistor 82 du bloc de test 42 est reliée à la septième borne 42_7 et à la dixième borne 42_10 du bloc de test 42.

Il est notable que selon un mode de défaillance (court-circuit du régulateur de tension 84), à la fois la grille 82G et la source 82S reçoivent une tension de 24V. Le transistor 82 du bloc de test 42 est ainsi dans un état bloqué et ainsi il est évité l'émission d'une tension haute (24V en l'occurrence) sur la tension de référence des interfaces 40A et 40B.

La première borne 84_1 du régulateur de tension 84 est reliée à la troisième borne 42_3 du bloc de test 42 et au drain 82D du transistor 82 du bloc de test 42. La deuxième borne 84_2 du régulateur de tension 84 est reliée à la première borne 80_1 de la troisième résistance 80 du bloc de test 42 et à la deuxième borne 78_2 de la deuxième résistance 78 du bloc de test 42. La troisième borne 84_3 du régulateur de tension 84 est reliée à la deuxième borne 42_2 du bloc de test 42.

La première borne 42_1 du bloc de test 42 est reliée à la cinquième entrée 60 du premier module d'entrées 32.

La deuxième borne 42_2 du bloc de test 42 est reliée à la quatrième entrée 58 du premier module d'entrées 32.

La cinquième entrée 60 et la quatrième entrée 58 du premier module d'entrées 32 relient donc l'alimentation des capteurs 14A, 14D, 16 et 18 au premier module d'entrées 32. La quatrième entrée 58 du premier module d'entrées 32 reçoit le 0V qui est le potentiel de référence pour les interfaces 40A, 40B.

Les troisième borne 42_3, quatrième borne 42_4, cinquième borne 42_5, sixième borne 42_6, septième borne 42_7, huitième borne 42_8 du bloc de test 42 sont reliées à la partie d'isolation 44.

La neuvième borne 42_9 du bloc de test 42 est reliée à la quatrième borne 40A4 de la première interface 40A et à la quatrième borne 40B4 de la deuxième interface 40B.

La dixième borne 42_10 du bloc de test 42 est reliée d'une part à la septième borne 42_7 du bloc de test 42 et d'autre part à la troisième borne 40A3 de la première interface 40A et à la troisième borne 40B3 de la deuxième interface 40B.

La onzième borne 42_11 du bloc de test 42 est reliée d'une part à la sixième borne 42_6 du bloc de test 42 et d'autre part à la deuxième borne 40A2 de la première interface 40A et à la deuxième borne 40B2 de la deuxième interface 40B.

Le bloc de test 42 permet de fournir entre la septième borne 42_7 du bloc de test 42 et la huitième borne un courant indiquant la présence d'une alimentation à 24V. Un court-circuit entre les cinquième borne 42_5 et sixième borne 42_6 du bloc de test 42 permet aussi de mettre les interfaces 40A et 40B en mode forçage. Un court-circuit entre les quatrième borne 42_4 et troisième borne 42_3 du bloc de test 42 permet aussi de mettre les interfaces 40A et 40B à l'état bas.

La partie d'isolation 44 comporte un premier optotransitor 85A, un deuxième optotransistor 85B et trois isolateurs 86, 88, 90.

Dans l'exemple de la figure 2, le premier optotransistor 85A, le deuxième optotransistor 85B et le premier isolateur 86 sont des entrées tandis que les deuxième isolateur 88 et troisième isolateur 90 sont des sorties de commandes. Pour le premier module d'entrées 32, au contraire, le premier optotransistor 85A, le deuxième optotransistor 85B et le premier isolateur 86 sont des sorties tandis que les deuxième isolateur 88 et troisième isolateur 90 sont des entrées de commandes.

Plus précisément, le premier isolateur 86 permet d'indiquer la présence d'une alimentation à 24V tandis que le deuxième isolateur 88 et le troisième isolateur 90 sont propres à contrôler les courts-circuits respectivement entre les cinquième borne 42_5 et sixième borne 42_6 du bloc de test 42 et les deuxième borne 42_2 et troisième borne 42_3 du bloc de test 42.

Selon l'exemple de la figure 2, un optotransistor est un ensemble d'une photodiode et d'un phototransistor en communication optique. La photodiode et le phototransistor sont isolés. Le sens du montage est indiqué par des flèches sur la figure 2, le sens indiqué par les flèches correspondant à une transmission depuis l'émission vers la réception.

A titre d'exemple, dans le cas de la figure 2, les isolateurs 86, 88 et 90 sont également des optotransistors.

En variante, chaque isolateur 86, 88 et 90 est remplacé par tout autre dispositif permettant d'assurer une isolation, comme un dispositif capacitif ou inductif.

Par simplification, les différentes connexions internes à l'optotransistor 85A qui comprend un optocoupleur 92A, une résistance 94A et quatre bornes 85A1, 85A2, 85A3 et 85A4 ne sont pas détaillées dans la suite. En effet, les connexions internes à l'optotransistor 85A découlent du fait que la sortie du phototransistor de l'optotransistor 85A est reliée à la résistance 94A.

La première borne 85A1 du premier optotransistor 85A est reliée à la sixième borne 40A6 de la première interface 40A.

La deuxième borne 85A2 du premier optotransistor 85A est reliée à la cinquième borne 40A5 de la première interface 40A. La troisième borne 85A3 du premier optotransistor 85A est reliée au premier bloc de diagnostic 46A.

La quatrième borne 85A4 est reliée à la deuxième sortie 48A2 du premier module d'entrées 32.

Il résulte de ces connexions que la tension appliquée à l'entrée du premier bloc de diagnostic 46A est proportionnel au courant traversant la photodiode (en mode lecture) du premier optotransistor 85A et donc proportionnel au courant fourni par le premier capteur 14A. Ceci permet de diagnostiquer plusieurs valeurs de courant produites par le premier capteur 14A connecté à la première entrée 10A dans une certaine plage le fonctionnement de certains éléments du premier module d'entrées 32.

Le deuxième optotransistor 85B est similaire au premier optotransistor 85A mais interagit avec la deuxième interface 40B au lieu de la première interface 40A. Les mêmes remarques que précédemment s'appliquent donc pour le deuxième optotransistor 85B en remplaçant la lettre A par la lettre B dans le signe de référence lorsque cela est pertinent.

Le premier isolateur 86 comporte une première borne 86_1, une deuxième borne 86_2 et une troisième borne 86_3. La troisième borne 86_3 du premier isolateur 86 est isolée par rapport à la première borne 86_1 et à la deuxième borne 86_2 du premier isolateur 86.

La première borne 86_1 du premier isolateur 86 est reliée à la huitième borne 42_8 du bloc de test 42. La deuxième borne 86_2 du premier isolateur 86 est reliée à la septième borne 42_7 du bloc de test 42. La troisième borne 86_3 du premier isolateur 86 est reliée à la première entrée 52 du module d'entrées 32.

Le deuxième isolateur 88 comporte une première borne 88_1, une deuxième borne 88_2 et une troisième borne 88_3. La troisième borne 88_3 du deuxième isolateur 88 est isolée par rapport à la première borne 88_1 et à la deuxième borne 86_2 du deuxième isolateur 88.

La première borne 88_1 du deuxième isolateur 88 est reliée à la sixième borne 42_6 du bloc de test 42. La deuxième borne 88_2 du deuxième isolateur 88 est reliée à la cinquième borne 42_5 du bloc de test 42. La troisième borne 88_3 du deuxième isolateur 88 est reliée à la deuxième entrée 54 du module d'entrées 32 via une résistance 92.

Le troisième isolateur 90 comporte une première borne 90_1, une deuxième borne 90_2 et une troisième borne 90_3. La troisième borne 90_3 du troisième isolateur 90 est isolée par rapport à la première borne 90_1 et à la deuxième borne 90_2 du troisième isolateur 90.

La première borne 90_1 du troisième isolateur 90 est reliée à la quatrième borne 42_4 du bloc de test 42. La deuxième borne 90_2 du troisième isolateur 90 est reliée à la troisième borne 42 3 du bloc de test 42. La troisième borne 90_3 du troisième isolateur 90 est reliée à la troisième entrée 56 du module d'entrées 32 via une résistance 94.

Ainsi, il apparaît que le deuxième et le troisième isolateurs 88 et 90 représente un interrupteur programmable permettant de modifier le fonctionnement du bloc de test 42.

Le premier bloc de diagnostic 46A comporte un comparateur 100A, une unité de décodage 102A.

Le comparateur 100A est un comparateur multiseuils, c'est-à-dire que le comparateur est propre à comparer une tension à plusieurs seuils, trois dans le cas de la figure 2.

Le comparateur 100A comporte quatre bornes 100A1, 100A2, 100A3 et 100A4.

L'unité de décodage 102A est propre à déduire le diagnostic de l'élément testé à partir du résultat de la comparaison par le comparateur 100A lorsque l'interface 40A ou 40B est dans un état de lecture. Par exemple, si le deuxième seuil est atteint, l'unité de décodage 102A détermine que l'élément testé ne reçoit pas plus de courant que le courant nominal prévu.

L'unité de décodage 102A comprend quatre bornes 102A1, 102A2, 102A3 et 102A4.

La première borne 100A1 du comparateur 100A est reliée à la troisième borne 85A3 du premier optotransistor 85A. La deuxième borne 100A2 du comparateur 100A est reliée à la première borne 102A1 de l'unité de décodage 102A. La troisième borne 100A3 du comparateur 100A est reliée à la deuxième borne 102A2 de l'unité de décodage 102A. La quatrième borne 100A4 du comparateur 100A est reliée à la troisième borne 102A3 de l'unité de décodage 102A.

La première borne 102A1 de l'unité de décodage 102A est reliée à la deuxième borne 100A2 du comparateur 100A. La deuxième borne 102A2 de l'unité de décodage 102A est reliée à la troisième borne 100A3 du comparateur 100A. La troisième borne 102A3 de l'unité de décodage 102A est reliée à la quatrième borne 100A4 du comparateur 100A. La quatrième borne 102A4 de l'unité de décodage 102A est reliée à la première sortie 48A1 du premier module d'entrées 32.

Le deuxième bloc de diagnostic 46B est similaire au premier bloc de diagnostic 46A mais interagit avec le deuxième optotransistor 85B au lieu du premier optotransistor 85A. Les mêmes remarques que précédemment s'appliquent donc pour le deuxième bloc de diagnostic 46B en remplaçant la lettre A par la lettre B dans le signe de référence lorsque cela est pertinent.

La première sortie 48A1 du premier module d'entrées 32 est reliée à la quatrième sortie 102A4 de l'unité de décodage 102A du premier bloc de diagnostic 46A. Ainsi, il s'agit de la ligne de diagnostic du premier capteur 14A relié à l'interface 40A.

La deuxième sortie 48A2 du premier module d'entrées 32 est reliée à la quatrième borne 85A4 du premier optotransistor 85A Ainsi, il s'agit de la ligne d'état du premier capteur 14A relié à l'interface 40A.

La troisième sortie 50B1 du premier module d'entrées 32 est reliée à la quatrième borne 102B4 de l'unité de décodage 102B du deuxième bloc de diagnostic 46B.

La quatrième sortie 50B2 du premier module d'entrées 32 est reliée à la quatrième borne 85B4 du deuxième optotransistor 85B.

La première entrée 52 du premier module d'entrées 32 est reliée à la troisième borne 86_3 du premier isolateur 86.

La première entrée 52 est propre à donner le statut de fonctionnement de l'alimentation à 24 V.

La deuxième entrée 54 du premier module d'entrées 32 est reliée à la troisième borne 88_3 du deuxième isolateur 88 via la résistance 92.

La troisième entrée 56 du premier module d'entrées 32 est reliée à la troisième borne 90_3 du troisième isolateur 90 via la résistance 94.

La quatrième entrée 58 du premier module d'entrées 32 est reliée d'un part à une source de tension de 0V correspondant à l'état bas et d'autre part à la deuxième borne 42_2 du bloc de test 42.

La cinquième entrée 60 du premier module d'entrées 32 est reliée d'un part à une source de tension de 24V correspondant à l'état de forçage et d'autre part à la première borne 42_1 du bloc de test 42.

Le deuxième module d'entrées/sorties 34 est relié à la troisième sortie 10C et quatrième entrée 10D de l'automate 10. Le deuxième module d'entrées/sorties 34 est propre à assurer un interfaçage sécurisé entre l'unité centrale 28 et l'actionneur 16 et le capteur 14B reliés respectivement à la troisième sortie 10C et à la quatrième entrée 10D.

Le fonctionnement de l'automate 10, et plus spécifiquement du premier module d'entrées 32, est maintenant décrit en référence à un exemple de procédé de test du premier module d'entrées 32.

Le procédé de test comporte une première étape dans laquelle le bloc de test 42 impose un état de forçage à chaque sixième borne 40A6, 40B6 de chaque interface 40A, 40B. Pour cela, selon l'exemple des figures 1 et 2, la première unité de traitement 24 applique un état de forçage à la deuxième entrée 54 du premier module d'entrées 32. Cet état de forçage est relayé par le deuxième isolateur 88 à la sixième borne 42_6 du bloc de test 42. Comme la sixième borne 42_6 du bloc de test 42 est reliée à la onzième borne 42_11 du bloc de test 42, cette onzième borne 42_11 est à l'état de forçage. Ceci impose que les deuxièmes bornes 40A2 et 40B2 de chacune des interfaces 40A, 40B sont à l'état de forçage. Chaque deuxième diode 64A, 64B passe alors dans l'état passant et une tension est appliquée sur le collecteur 74AC, 74BC de chaque transistor 74A, 74B. Il en résulte, en l'absence d'anomalie de fonctionnement normal que la sixième borne 40_A6, 40B_6 de chacune des interfaces 40A, 40B est également à l'état de forçage.

Le procédé comporte alors une deuxième étape de vérification de l'état de fonctionnement du module d'entrées 32 lorsque le bloc de test 42 impose un état de forçage à chaque sixième borne 40A6, 40B6 de chaque interface 40A, 40B. Une telle deuxième étape est mise en œuvre par le sous-module de traitement 24. Le sous-module de traitement 24 évalue l'état de la deuxième sortie 48A2 du premier module d'entrées 32, l'état de la quatrième sortie 50B2 du premier module d'entrées 32 et l'état de la première entrée 52 du module d'entrées 32. D'une part, la présence d'un état haut sur la deuxième sortie 48A2 du premier module d'entrées 32 et sur la quatrième sortie 50B2 du premier module d'entrées 32 signifie que les interfaces 40A et 40B sont aptes à produire un état haut sur la deuxième sortie 48A2 du premier module d'entrées 32 et sur la quatrième sortie 50B2 du premier module d'entrées 32. D'autre part, la présence d'un état haut sur la première entrée 52 du module d'entrées 32 montre que le bloc de test 42 est apte à produire la tension de référence à appliquer au module d'entrées 32 et que le module d'entrées 32 est bien alimenté.

Le procédé de test comporte une troisième étape dans laquelle le bloc de test 42 impose un état bas à chaque sixième borne 40A6, 40B6 de chaque interface 40A, 40B. Pour cela, selon l'exemple des figures 1 et 2, la première unité de traitement 24 applique un état de forçage à la troisième entrée 56 du premier module d'entrées 32. Cet état de forçage est relayé par le troisième isolateur 90 qui présente alors un court-circuit entre la deuxième borne 42 2 du bloc de test 42 et la troisième borne 42 3 du bloc de test 42. Le transistor 82 du bloc de test 42 se trouve alors dans un état bloqué et la dixième borne 42_10 du bloc de test 42 ne produit plus de tension de référence sur la troisième borne 40A3 de la première interface 40A et la troisième borne 40B3 de la deuxième interface 40B. Ceci impose que les troisièmes bornes 40A3 et 40B3 de chacune des interfaces 40A, 40B sont à l'état bas. Du fait que ces troisièmes bornes 40A3 et 40B3 sont respectivement en liaison avec la base 74AB et 74BB de chaque transistor 74A, 74B de chaque interface 40A, 40B, il en résulte, en l'absence d'anomalie de fonctionnement normal que la sixième borne 40_A6, 40B_6 de chacune des interfaces 40A, 40B est à l'état bas.

Le procédé comporte alors une quatrième étape de vérification de l'état de fonctionnement du module d'entrées 32 lorsque le bloc de test 42 impose un état bas à chaque sixième borne 40A6, 40B6 de chaque interface 40A, 40B. Une telle quatrième étape est mise en œuvre par le sous-module de traitement 24. Le sous-module de traitement 24 évalue l'état de la deuxième sortie 48A2 du premier module d'entrées 32, l'état de la quatrième sortie 50B2 du premier module d'entrées 32 et l'état de la première entrée 52 du module d'entrées 32. D'une part, la présence d'un état bas sur la deuxième sortie 48A2 du premier module d'entrées 32 et sur la quatrième sortie 50B2 du premier module d'entrées 32 signifie que les interfaces 40A et 40B sont aptes à produire un état bas sur la deuxième sortie 48A2 du premier module d'entrées 32 et sur la quatrième sortie 50B2 du premier module d'entrées 32 au travers des optotransistors 85A et 85B. D'autre part, la présence d'un état bas sur la première entrée 52 du module d'entrées 32 montre que le premier isolateur 86 est apte a signaler une absence de tension de signal de référence.

Le procédé de test comprend alors une étape de déduction de l'état de fonctionnement du premier module d'entrées 32 en fonction des résultats des deuxième et quatrième étapes de vérification.

Pour simplifier les notations, les résultats obtenus à l'issue de la deuxième étape de vérification et de la quatrième étape de vérification sont notés sous la forme d'un vecteur de résultat (E1, E2, E3, E4, E5, E6) où E1 représente l'état de la deuxième sortie 48A2 du premier module d'entrées 32 à la deuxième étape, E2 représente l'état de quatrième sortie 50B2 du premier module d'entrées 32 à la deuxième étape, E3 représente l'état de la première entrée 52 du module d'entrées 32 à la deuxième étape, E4 représente l'état de la deuxième sortie 48A2 du premier module d'entrées 32 à la quatrième étape, E5 représente l'état de quatrième sortie 50B2 du premier module d'entrées 32 à la quatrième étape et E6 représente l'état de la première entrée 52 du module d'entrées 32 à la quatrième étape. En outre, chacun des états E1, E2, E3, E4, E5, E6 prend une valeur égale à 0 lorsque l'état est un état bas et une valeur égale à 1 lorsque l'état est un état haut.

Lorsque le vecteur de résultat est (0, 0, 0, 0, 0, 0), cela signifie que l'alimentation est absente. Il est indiqué à l'automate 10 que l'état des entrées 10A et 10B ne reflète pas l'état du capteur 14A et du bouton d'arrêt d'urgence 18. En outre, il est indiqué à l'automate 10 que le module d'entrées 32 n'est pas en panne.

Lorsque le vecteur de résultat est (1, 1, 1, 0, 0, 0), il est indiqué à l'automate 10 les informations relatives à l'état des entrées sans indiquer de faute. Plus précisément, en l'occurrence, le capteur 14A et le bouton d'arrêt d'urgence 18 sont dans un état fermé. Un état haut à la deuxième étape ne peut être indiqué lorsque l'élément relié à l'entrée considérée est ouvert

Pour tous les autres vecteurs de résultats. Il est déterminé qu'une anomalie de fonctionnement a eu lieu et que le module d'entrées 32 n'est plus apte à délivrer des informations sécurisées.

En particulier, lorsque le vecteur de résultat est (1, 0, 1, 1, 0, 0), (1, 0, 1, 0, 1, 0), (0, 1, 1, 1, 0, 0) ou (0, 1, 1, 0, 1, 0), cela signifie qu'une des deux interfaces 40A ou 40B présente un défaut.

Lorsque le vecteur de résultat est (0, 0, 1, - , -, -) ou (-, -, -, 1, 1, 0), avec « - » qui signifie 0 ou 1, cela signifie les deux interfaces 40A, 40B présente un défaut ou qu'une commande de forçage est cassée.

Lorsque le vecteur de résultat est (1, 1, 0, 0, 0, 0), cela signifie que le régulateur de tension 84 est court-circuité.

Lorsque le vecteur de résultat est (1, 1, 1, 0, 0, 1), cela signifie que la première entrée 52 du module d'entrées 32 est cassée.

Ainsi, le sous-module de traitement 24 est propre à déterminer une anomalie de fonctionnement d'une ou des deux interfaces 40A, 40B et/ou du bloc de test 42 et/ou de la partie d'isolation 44 lorsque l'état de la sixième borne 40A6, 40B6 d'au moins une interface 40A, 40B diffère de l'état de forçage alors que l'état imposé par le bloc de test 42 est l'état de forçage.

Similairement, le sous-module de traitement 24 est propre à déterminer une anomalie de fonctionnement de la partie d'isolation 44 lorsque l'état de la sixième borne 40A6, 40B6 d'au moins une interface 40A, 40B diffère de l'état bas alors que l'état imposé par le bloc de test 42 est l'état bas.

Pour mieux comprendre la capacité du procédé de test à déterminer une anomalie de fonctionnement, il convient de considérer les cas de pannes à envisager pour les différents composants appartenant au premier module d'entrées 32. Dans la suite, une défaillance de composant est considérée comme une panne seulement si cette défaillance affecte la mesure du niveau de l'entrée 32A du module d'entrées 32 et n'est pas détectable par les différents tests exécutés à chaque période de diagnostic du module d'entrées 32. Corollairement, une défaillance de composant qui perturbe la mesure du niveau d'entrée 32A du module d'entrées 32 qui serait détectée par un au moins des diagnostics n'est pas considérée comme une panne, bien qu'une telle défaillance implique le remplacement du module d'entrée 32.

Par définition, la période de diagnostic est fixée de façon à garantir la fiabilité du module d'entrée 32: en réduisant la période de diagnostic, la probabilité qu'un composant devienne défaillant entre deux tests diminue proportionnellement. A l'extrême quand la période de diagnostic est égale à la période d'échantillonnage, seules les défaillances indétectables par les diagnostics et ayant des conséquences indésirables participeront à l'évaluation, pour le module d'entrées 32, du temps moyen entre deux pannes, expression souvent désignée par son acronyme MTTF (pour l'anglais mean time between failures). L'analyse qui suit a pour but de déterminer les défaillances de composant qui ne seront pas détectées par les diagnostics. Par clarté, l'expression « temps moyen entre pannes » est réservée aux composants du premier module d'entrées 32 alors que l'expression « période de diagnostic » est réservée au premier module d'entrées 32 dans son ensemble.

Pour l'isolateur 92A du premier optotransistor 85A, la photodiode peut se casser avant la période de diagnostic. Cela empêche qu'un état de forçage soit détecté à la sixième borne 40A6 de la première interface 40A alors qu'un état de forçage est imposé.

Pour l'isolateur 92A du premier optotransistor 85A, le phototransistor peut être court-circuité, ce qui empêche qu'un état bas soit détecté à la sixième borne 40A6 de la première interface 40A alors qu'un état bas est imposé.

Pour l'isolateur 92B du deuxième optotransistor 85B, la photodiode peut se casser avant la période de diagnostic. Cela empêche qu'un état de forçage soit détecté à la sixième borne 40B6 de la deuxième interface 40B alors qu'un état de forçage est imposé.

Pour l'isolateur 92B du deuxième optotransistor 85B, le phototransistor peut être court-circuité, ce qui empêche qu'un état bas soit détecté à la sixième borne 40B6 de la deuxième interface 40B alors qu'un état bas est imposé.

Pour le transistor 74A de la première interface 40A, le lien entre l'émetteur 74AE et le collecteur 74AC peut être rompu. Cela empêche qu'un état de forçage soit détecté à la sixième borne 40A6 de la première interface 40A alors qu'un état de forçage est imposé.

Pour le transistor 74A de la première interface 40A, un court-circuit entre l'émetteur 74AE et le collecteur 74AC n'interfère pas avec le fonctionnement du premier module d'entrées 32, plus précisément avec la sécurité des informations produites par la première interface 40A.

Pour le transistor 74B de la deuxième interface 40B, le lien entre l'émetteur 74BE et le collecteur 74BC peut être rompu. Cela empêche qu'un état de forçage soit détecté à la sixième borne 40B6 de la deuxième interface 40B alors qu'un état de forçage est imposé.

Pour le transistor 74B de la deuxième interface 40B, un court-circuit entre l'émetteur 74BE et le collecteur 74BC n'interfère pas avec la sécurité des informations produites par la deuxième interface 40B du premier module d'entrées 32.

Pour le transistor 82 du bloc de test 42, le lien entre la source 82S et le drain 82D peut être rompu. Cela empêche la troisième entrée 52 du premier module d'entrées 32 soit dans un état haut alors qu'un état de forçage d'entrée est imposé.

Pour le transistor 82 du bloc de test 42, un court-circuit entre la source 82S et le drain 82D n'interfère pas avec le la sécurité des informations produites par la première interface 40A et la deuxième interface 40B du premier module d'entrées 32.

Comme le temps moyen entre pannes d'une résistance est supérieur à la période de diagnostic d'un module d'entrées 32, aucune des résistances 66A, 66B, 68A, 68B, 70A, 70B, 72A, 72B, 76, 78, 80, 94A, 94B, 92, 94 du premier module d'entrées 32 n'interfère avec le fonctionnement de celui-ci.

Similairement, le temps moyen entre pannes d'une diode est supérieur à la période de diagnostic d'un module d'entrées 32, aucune des diodes 62A, 62B, 64A, 64B du premier module d'entrées 32 n'interfère avec le fonctionnement de celui-ci.

Pour le premier isolateur 86, la photodiode de l'isolateur 86 peut subir une panne durant la période de diagnostic d'un module d'entrées 32. Une telle panne empêche que la troisième entrée 52 du premier module d'entrées 32 soit dans un état haut alors qu'un état de forçage d'entrée est imposé.

En outre, pour le premier isolateur 86, le phototransistor peut être court-circuité. Dans ce cas, il est empêché que la troisième entrée 52 du premier module d'entrées 32 soit dans un état bas alors que la référence de tension a été déconnectée.

Pour le deuxième isolateur 88, la photodiode peut se casser avant la période de diagnostic. Cette panne empêche un forçage de la onzième borne 42_11 du bloc de test 42 alors qu'un état de forçage respectivement un état bas est imposé.

Pour le deuxième isolateur 88, le phototransistor peut être court-circuité, ce impose un état haut sur la onzième borne 42_11 du bloc de test 42 et un état bas sur la dixième borne 42_10 du bloc de test 42 alors qu'un état de forçage est imposé. Il en résulte que les entrées des interfaces 40A, 40B sont forcées à un état haut.

Pour le troisième isolateur 90, la photodiode peut se casser avant la période de diagnostic. Cette panne empêche la mise à un état bas de la dixième borne 42_10 du bloc de test 42 alors qu'un état de forçage respectivement un état bas est imposé.

Pour le troisième isolateur 90, le phototransistor peut être court-circuité, ce qui empêche qu'un état haut soit détecté à la sixième borne 40A6 de la première interface 40A et à la sixième borne 40B6 de la deuxième interface 40B alors qu'un état de forçage est imposé.

Pour le régulateur de tension 84, un court-circuit entre sa deuxième borne 84_2 et sa troisième borne 84_3 empêche qu'un état de forçage soit détecté sur la troisième entrée 52 du premier module d'entrées 32 alors qu'un état de forçage est imposé.

En résumé, autrement formulé, la première étape du procédé impose au deuxième isolateur 88 de se comporter comme un circuit fermé. Ceci implique que du courant issu du régulateur de tension 84 est injecté dans les deux optotransistors 85A et 85B via les deuxièmes diodes 64A et 64B et les transistors 74A et 74B des deux interfaces 40A et 40B. en complément, il est vérifié que la tension de référence est également présente sur la septième borne 42_7 et la dixième borne 42_10 du bloc de test 42.

En l'absence d'anomalie de fonctionnement, chaque sixième borne 40A6 et 40B6 des deux interfaces 40A et 40B est à l'état de forçage, ce qui permet de valider l'absence d'anomalie de fonctionnement du régulateur de tension 84, des isolateurs 92A et 92B des deux optotransistors 85A et 85B (le phototransistor n'est pas court-circuité), des transistors 74A et 74B des deux interfaces 40A et 40B et du deuxième isolateur 88.

Lors de la troisième étape du procédé, le troisième isolateur 90 génère un court-circuit entre la source 82S et la grille 82G du transistor 82 du bloc de test 42. Ainsi, le régulateur de tension 84 n'est plus relié aux troisièmes bornes 40A3 et 40B3 des deux interfaces 40A et 40B. De ce fait, aucun courant ne peut circuler dans les photodiodes des optotransistors 85A et 85B une tension 24 V est imposée en entrée de ceux-ci. De plus, le premier isolateur 83 ne reçoit plus de courant dans la photodiode.

En l'absence d'anomalie de fonctionnement, chaque sixième borne 40A6 et 40B6 des deux interfaces 40A et 40B est à l'état bas, ce qui permet de valider l'absence de court-circuit des deux optotransistors 85A et 85B (les transistors ne sont pas en court-circuit), des deux premier et deuxième isolateurs 86 et 88 et que le troisième isolateur 90 n'est pas coupé.

De ce fait, il a été montré que le premier module d'entrées 32 permet à l'aide de l'exemple de procédé de test précédemment décrit d'effectuer un test du bon fonctionnement des composants du premier module d'entrées 32.

Il est à noter que, selon l'exemple décrit, chaque interface 40A, 40B comprend uniquement des composants dont le mode de défaillance est connu, à savoir des résistance 66A, 68A, 70A, 72A, 66B, 68B, 70B, 72B, une diode 62A, 64A, 62B, 64B, un transistor 74A, 74B ou un régulateur de tension simple.

Plus précisément, il peut être montré qu'un tel module est compatible avec les exigences de la norme SIL4 tel que définie dans le document normatif EN61508, cette norme traitant de la sécurité fonctionnelle des systèmes électrique / électronique / électronique programmable relatifs à la sécurité. Cela signifie en particulier que le taux de panne est intérieur à 1%.

En outre, cela évite de proposer une architecture pour le premier module d'entrées 32 dans laquelle chaque entrée 10A, 10B est pourvue d'au moins deux interfaces. En l'occurrence, une seule interface 40A, 40B est prévue pour chaque entrée 10A, 10B. Il est à noter que le premier module d'entrées 32 a été décrit pour deux entrées 10A, 10B pour simplifier les schémas mais que, bien entendu, le nombre d'interfaces 40 peut être aussi grand que désiré puisque chaque interface 40 est branchée en parallèle. En pratique, le nombre d'interfaces 40 correspond au nombre d'entrées du module d'entrées considéré. Cela permet de diminuer l'encombrement associé au premier module d'entrées 32 tout en garantissant un bon niveau de sécurité.

De plus, il apparaît que la séquence de test est simple puisqu'elle implique une phase de forçage des sixièmes bornes 40A, 40B des interfaces 40A, 40B à l'état de forçage pour vérifier qu'il n'existe pas de faute interférente à produire un état de forçage suivie d'une phase de forçage des sixièmes bornes 40A, 40B des interfaces 40A, 40B à l'état bas pour vérifier qu'il n'y a pas de faute interférente à produire un état bas. Cette simplicité rend possible la réalisation de la séquence de test à chaque cycle de lecture. Ainsi, selon un mode de réalisation préféré, le procédé comprend la phase de test avec les deux forçages puis une phase de lecture des données de lecture dans laquelle la sixième borne 40A6, 40B6 de l'interface 40A, 40B est propre à délivrer une image du signal reçu par l'entrée 32A, 32B associée à l'interface 40A, 40B considérée. Ce procédé est cyclique, c'est-à-dire qu'une fois achevée la phase de lecture, une nouvelle phase de test est mise en œuvre, à nouveau suivie par une phase de lecture et ainsi de suite.

Dans le cas particulier présenté, les transistors 74A et 74B de chaque interface 40A, 40B permettent de limiter le courant de la sixième borne 40A6, 40B6 de l'interface 40A, 40B. Ceci résulte en une limitation de la puissance dissipée par l'interface 40A, 40B.

En remplacement des composants proposés pour le module d'entrées 32 particulier de la figure 2, l'homme du métier est capable de proposer d'autres composants assurant des fonctions similaires, sachant que les composants dont le temps moyen entre pannes est strictement supérieur à la période de diagnostic du module d'entrées 32 sont à privilégier puisqu'ils permettent d'obtenir un procédé de test plus simple à mettre en œuvre.

## Revendications

1. Module d'entrées (32) pour automate programmable industriel propre à être relié à une pluralité d'éléments d'une chaîne automatisée, le module d'entrées (32) comprenant :
- des entrées (32A, 32B), chaque entrée (32A, 32B) étant propre à recevoir un signal issu d'au moins un élément (14A, 18) de la pluralité d'éléments (12, 14A, 14B, 16, 18, 20A, 20B, 20C, 20D),
- des interfaces (40A, 40B), chaque interface (40A, 40B) étant associée à une seule entrée et comprenant au moins une sortie (40A6, 40B6) propre à fonctionner selon trois états distincts :
∘ un état de forçage correspondant à la tension maximale que la sortie (40A6, 40B6) de l'interface (40A, 40B) est propre à délivrer,
∘ un état bas correspondant à la tension minimale que la sortie (40A6, 40B6) de l'interface (40A, 40B) est propre à délivrer, et
∘ un état de lecture dans lequel la sortie (40A6, 40B6) de l'interface (40A, 40B) est propre à délivrer une image du signal reçu par l'entrée (32A, 32B) associée à l'interface (40A, 40B) considérée,
- un bloc de test (42) relié à chacune des interfaces (40A, 40B) et propre à imposer l'état de la sortie (40A6, 40B6) de chaque interface (40A, 40B), et
- un sous-module de traitement (24) propre à comparer l'état de la sortie (40A6, 40B6) de chaque interface (40A, 40B) avec l'état imposé par le bloc de test (42) et à en déduire une anomalie de fonctionnement du module d'entrées (32, 34) lorsque l'état de la sortie (40A6, 40B6) d'au moins une interface (40A, 40B) diffère de l'état imposé par le bloc de test (42).

2. Module d'entrées selon la revendication 1, dans lequel chaque interface (40A, 40B) comprend des composants ayant un mode de défaillance connu, de préférence chaque composant étant uniquement choisi parmi le groupe constitué d'une résistance (66A, 68A, 70A, 72A, 66B, 68B, 70B, 72B), d'un transistor (74A, 74B) et d'une diode (62A, 64A, 62B, 64B).

3. Module d'entrées selon la revendication 1 ou 2, dans lequel chaque interface (40A, 40B) est identique.

4. Module d'entrées selon l'une quelconque des revendications 1 à 3, dans lequel chaque interface (40A, 40B) comporte un unique transistor propre à modifier l'état de la sortie (40A6, 40B6) de l'interface (40A, 40B) .

5. Module d'entrées selon l'une quelconque des revendications 1 à 4, dans lequel le module d'entrées (32, 34) comporte en outre une partie d'isolation (44) isolant le sous-module de traitement (24) des interfaces (40A, 40B) et du bloc de test (42).

6. Module d'entrées selon l'une quelconque des revendications 1 à 5, dans lequel le module d'entrées (32, 34) comporte, en outre, une alimentation spécifique au bloc de test (42).

7. Module d'entrées selon la revendication 6, dans lequel le sous-module de traitement (24) est propre à déterminer :
• une anomalie de fonctionnement d'au moins l'un des éléments du groupe constitué des deux interfaces (40A, 40B), du bloc de test (42) et de la partie d'isolation (44) lorsque l'état de la sortie (40A6, 40B6) d'au moins une interface (40A, 40B) diffère de l'état de forçage alors que l'état imposé par le bloc de test (42) est l'état de forçage,
• une absence d'anomalie de fonctionnement lorsque le bloc de test (42) n'est pas alimenté, et
• une anomalie de fonctionnement d'au moins l'un des éléments du groupe constitué des interfaces (40A, 40B) et du bloc de test (42) lorsque l'état de la sortie (40A6, 40B6) d'au moins une interface (40A, 40B) diffère de l'état bas alors que l'état imposé par le bloc de test (42) est l'état bas.

8. Module d'entrées selon l'une quelconque des revendications 1 à 7, dans lequel le sous-module de traitement est propre à imposer de manière cyclique l'état de forçage, l'état bas puis l'état de lecture à chaque sortie (40A6, 40B6) de chaque interface (40A, 40B).

9. Automate programmable industriel (10) comportant au moins un module d'entrées (32) selon l'une quelconque des revendications 1 à 8.

10. Procédé de test d'un module d'entrées (32) pour automate programmable industriel propre à être relié à une pluralité d'éléments d'une chaîne automatisée, le module d'entrées (32) comprenant :
- des entrées (32A, 32B), chaque entrée (32A, 32B) étant propre à recevoir un signal issu d'au moins un élément (14A, 18) de la pluralité d'éléments (12, 14, 16, 18, 20A, 20B, 20C, 20D),
- des interfaces (40A, 40B), chaque interface (40A, 40B) étant associée à une seule entrée et comprenant au moins une sortie (40A6, 40B6) propre à fonctionner selon trois états distincts :
∘ un état de forçage correspondant à la tension maximale que la sortie (40A6, 40B6) de l'interface (40A, 40B) est propre à délivrer,
∘ un état bas correspondant à la tension minimale que la sortie (40A6, 40B6) de l'interface (40A, 40B) est propre à délivrer, et
∘ un état de lecture dans lequel la sortie (40A6, 40B6) de l'interface (40A, 40B) est propre à délivrer une image du signal reçu par l'entrée (32A, 32B) associée à l'interface (40A, 40B) considérée,
- un bloc de test (42) relié à chacune des interfaces (40A, 40B) et propre à imposer l'état de la sortie (40A6, 40B6) de chaque interface (40A, 40B), et
- un sous-module de traitement (24) propre à comparer l'état de la sortie (40A6, 40B6) de chaque interface (40A, 40B) avec l'état imposé par le bloc de test (42) et à en déduire une anomalie de fonctionnement du module d'entrées (32, 34) lorsque l'état de la sortie (40A6, 40B6) d'au moins une interface (40A, 40B) diffère de l'état imposé par le bloc de test (42),
le procédé comprenant les étapes de :
- imposer un état de forçage à chaque sortie (40A6, 40B6) de chaque interface (40A, 40B),
- vérification de l'état de fonctionnement du module d'entrées (32) lorsqu'un état de forçage est imposé à chaque sortie (40A6, 40B6) de chaque interface (40A, 40B),
- imposer un état bas à chaque sortie (40A6, 40B6) de chaque interface (40A, 40B),
- vérification de l'état de fonctionnement du module d'entrées (32) lorsqu'un état bas est imposé à chaque sortie (40A6, 40B6) de chaque interface (40A, 40B), et
- déduction de l'état de fonctionnement du module d'entrées (32) en fonction des résultats des étapes de vérification.

## Patentansprüche

1. Modul mit Eingängen (32) für einen programmierbaren Industrieautomaten, welcher imstande ist, mit einer Mehrzahl von Elementen einer automatisierten Kette verbunden zu sein, wobei das Modul mit Eingängen (32) aufweist:
- Eingänge (32A, 32B), wobei jeder Eingang (32A, 32B) imstande ist, ein Signal zu empfangen, welches von zumindest einem Element (14A, 18) von der Mehrzahl von Elementen (12, 14A, 14B, 16, 18, 20A, 20B, 20C, 20D) stammt,
- Schnittstellen (40A, 40B), wobei jede Schnittstelle (40A, 40B) mit einem einzigen Eingang assoziiert ist und zumindest einen Ausgang (40A6, 40B6) aufweist, welcher imstande ist, gemäß drei unterschiedlichen Zuständen zu funktionieren:
∘ einem Forcierung-Zustand, welcher zur maximalen Spannung korrespondiert, welche der Ausgang (40A6, 40B6) der Schnittstelle (40A, 40B) zu liefern imstande ist,
∘ einem Niedrig-Zustand, welcher zur minimalen Spannung korrespondiert, welche der Ausgang (40A6, 40B6) der Schnittstelle (40A, 40B) zu liefern imstande ist, und
∘ einem Lese-Zustand, in welchem der Ausgang (40A6, 40B6) der Schnittstelle (40A, 40B) imstande ist, ein Bild des Signals zu liefern, welches mittels des Eingangs (32A, 32B) empfangen wird, welcher mit der in Betracht gezogenen Schnittstelle (40A, 40B) assoziiert ist,
- einen Testblock (42), welcher mit jeder der Schnittstellen (40A, 40B) verbunden ist und imstande ist, den Zustand des Ausgangs (40A6, 40B6) jeder Schnittstelle (40A, 40B) zu erzwingen, und
- ein Untermodul zur Verarbeitung (24), welches imstande ist, den Zustand des Ausgangs (40A6, 40B6) jeder Schnittstelle (40A, 40B) mit dem mittels des Testblocks (42) erzwungenen Zustand zu vergleichen und daraus eine Funktionsanomalie des Moduls mit Eingängen (32, 34) abzuleiten, wenn der Zustand des Ausgangs (40A6, 40B6) von zumindest einer Schnittstelle (40A, 40B) vom mittels des Testblocks (42) erzwungenen Zustand abweicht.

2. Modul mit Eingängen gemäß Anspruch 1, wobei jede Schnittstelle (40A, 40B) Komponenten aufweist, welche einen bekannten Fehler-Modus haben, wobei vorzugsweise jede Komponente einzig aus der Gruppe auswählt ist, welche gebildet ist aus einem Widerstand (66A, 68A, 70A, 72A, 66B, 68B, 70B, 72B), aus einem Transistor (74A, 74B) und aus einer Diode (62A, 64A, 62B, 64B).

3. Modul mit Eingängen gemäß Anspruch 1 oder 2, wobei jede Schnittstelle (40A, 40B) identisch ist.

4. Modul mit Eingängen gemäß irgendeinem der Ansprüche 1 bis 3, wobei jede Schnittstelle (40A, 40B) einen einzigen Transistor aufweist, welcher imstande ist, den Zustand des Ausgangs (40A6, 40B6) der Schnittstelle (40A, 40B) zu modifizieren.

5. Modul mit Eingängen gemäß irgendeinem der Ansprüche 1 bis 4, wobei das Modul mit Eingängen (32, 34) ferner einen Abschnitt zur Isolation (44) aufweist, welcher das Untermodul zur Verarbeitung (24) von den Schnittstellen (40A, 40B) und vom Testblock (42) isoliert.

6. Modul mit Eingängen gemäß irgendeinem der Ansprüche 1 bis 5, wobei das Modul mit Eingängen (32, 34) ferner eine für den Testblock (42) spezifische Versorgung aufweist.

7. Modul mit Eingängen gemäß Anspruch 6, wobei das Untermodul zur Verarbeitung (24) imstande ist, zu ermitteln:
• eine Funktionsanomalie von zumindest einem der Elemente der Gruppe, welche gebildet ist aus den beiden Schnittstellen (40A, 40B), aus dem Testblock (42) und aus dem Abschnitt zur Isolation (44), wenn der Zustand des Ausgangs (40A6, 40B6) von zumindest einer Schnittstelle (40A, 40B) vom Forcierung-Zustand abweicht, während der mittels des Testblocks (42) erzwungene Zustand der Forcierung-Zustand ist,
• eine Abwesenheit einer Funktionsanomalie, wenn der Testblock (42) nicht versorgt wird, und
• eine Funktionsanomalie von zumindest einem der Elemente der Gruppe, welche gebildet ist aus den Schnittstellen (40A, 40B) und aus dem Testblock (42), wenn der Zustand des Ausgangs (40A6, 40B6) von zumindest einer Schnittstelle (40A, 40B) vom Niedrig-Zustand abweicht, während der mittels des Testblocks (42) erzwungene Zustand der Niedrig-Zustand ist.

8. Modul mit Eingängen gemäß irgendeinem der Ansprüche 1 bis 7, wobei das Untermodul zur Verarbeitung imstande ist, auf zyklische Weise an jedem Ausgang (40A6, 40B6) von jeder Schnittstelle (40A, 40B) den Forcierung-Zustand, den Niedrig-Zustand und dann den Lese-Zustand zu erzwingen.

9. Programmierbarer Industrieautomat (10), welcher zumindest ein Modul mit Eingängen (32) gemäß irgendeinem der Ansprüche 1 bis 8 aufweist.

10. Verfahren zum Überprüfen eines Moduls mit Eingängen (32) für einen programmierbaren Industrieautomaten, welcher imstande ist, mit einer Mehrzahl von Elementen einer automatisierten Kette verbunden zu sein, wobei das Modul mit Eingängen (32) aufweist:
- Eingänge (32A, 32B), wobei jeder Eingang (32A, 32B) imstande ist, ein Signal zu empfangen, welches von zumindest einem Element (14A, 18) von der Mehrzahl von Elementen (12, 14, 16, 18, 20A, 20B, 20C, 20D) stammt,
- Schnittstellen (40A, 40B), wobei jede Schnittstelle (40A, 40B) mit einem einzigen Eingang assoziiert ist und zumindest einen Ausgang (40A6, 40B6) aufweist, welcher imstande ist, gemäß drei unterschiedlichen Zuständen zu funktionieren:
∘ einem Forcierung-Zustand, welcher zur maximalen Spannung korrespondiert, welche der Ausgang (40A6, 40B6) der Schnittstelle (40A, 40B) zu liefern imstande ist,
∘ einem Niedrig-Zustand, welcher zur minimalen Spannung korrespondiert, welche der Ausgang (40A6, 40B6) der Schnittstelle (40A, 40B) zu liefern imstande ist, und
∘ einem Lese-Zustand, in welchem der Ausgang (40A6, 40B6) der Schnittstelle (40A, 40B) imstande ist, ein Bild des Signals zu liefern, welches mittels des Eingangs (32A, 32B) empfangen wird, welcher mit der in Betracht gezogenen Schnittstelle (40A, 40B) assoziiert ist,
- einen Testblock (42), welcher mit jeder der Schnittstellen (40A, 40B) verbunden ist und imstande ist, den Zustand des Ausgangs (40A6, 40B6) jeder Schnittstelle (40A, 40B) zu erzwingen, und
- ein Untermodul zur Verarbeitung (24), welches imstande ist, den Zustand des Ausgangs (40A6, 40B6) jeder Schnittstelle (40A, 40B) mit dem mittels des Testblocks (42) erzwungenen Zustand zu vergleichen und daraus eine Funktionsanomalie des Moduls mit Eingängen (32, 34) abzuleiten, wenn der Zustand des Ausgangs (40A6, 40B6) von zumindest einer Schnittstelle (40A, 40B) vom mittels des Testblocks (42) erzwungenen Zustand abweicht,
wobei das Verfahren die folgenden Schritte aufweist:
- Erzwingen eines Forcierung-Zustands an jedem Ausgang (40A6, 40B6) jeder Schnittstelle (40A, 40B),
- Verifizieren des Funktionszustands des Moduls mit Eingängen (32), wenn ein Forcierung-Zustand an jedem Ausgang (40A6, 40B6) jeder Schnittstelle (40A, 40B) erzwungen ist,
- Erzwingen eines Niedrig-Zustands an jedem Ausgang (40A6, 40B6) jeder Schnittstelle (40A, 40B),
- Verifizieren des Funktionszustands des Moduls mit Eingängen (32), wenn ein Niedrig-Zustand an jedem Ausgang (40A6, 40B6) jeder Schnittstelle (40A, 40B) erzwungen ist,
- Ableiten des Funktionszustands des Moduls mit Eingängen (32) in Abhängigkeit von den Ergebnissen der Schritte des Verifizierens.

## Claims

1. An input module (32) for a programmable logic controller able to be connected to a plurality of elements of an automated chain, the input module (32) comprising:
- inputs (32A, 32B), each input (32A, 32B) being able to receive the signal from at least one element (14A, 14B) of the plurality of elements (12, 14A, 14B, 16, 18, 20A, 20B, 20C, 20D),
- interfaces (40A, 40B), each interface (40A, 40B) being associated with a single input and comprising at least one output (40A6, 40B6) able to operate in three different states:
∘ a forcing state corresponding to the maximum voltage that the output (40A6, 40B6) of the interface (40A, 40B) is able to deliver,
∘ a low state corresponding to the minimum voltage that the output (40A6, 40B6) of the interface (40A, 40B) is able to deliver, and
∘ a read state in which the output (40A6, 40B6) of the interface (40A, 40B) is able to deliver an image of the signal received by the input (32A, 32B) associated with the considered interface (40A, 40B),
- a test block (42) connected to each of the interfaces (40A, 40B) and able to impose the state of the output (40A6, 40B6) of each interface (40A, 40B), and
- a processing sub-module (24) able to compare the state of the output (40A6, 40B6) of each interface (40A, 40B) with the state imposed by the test block (42) and to deduce an operating anomaly of the input module (32, 34) therefrom when the state of the output (40A6, 40B6) of at least one interface (40A, 40B) differs from the state imposed by the test block (42).

2. The input module according to claim 1, wherein each interface (40A, 40B) comprises components having a known failure mode, preferably each component being uniquely chosen from the group consisting of a resistance (66A, 68A, 70A, 72A, 66B, 68B, 70B, 72B), a transistor (74A, 74B) and a diode (62A, 64A, 62B, 64B).

3. The input module according to claim 1 or 2, wherein each interface (40A, 40B) is identical.

4. The input module according to any one of claims 1 to 3, wherein each interface (40A, 40B) includes a single transistor able to modify the state of the output (40A6, 40B6) of the interface (40A, 40B).

5. The input module according to any one of claims 1 to 4, wherein the input module (32, 34) further includes an isolating part (44) isolating the processing sub-module (24) from the interfaces (40A, 40B) and the test block (42).

6. The input module according to any one of claims 1 to 5, wherein the input module (32, 34) further includes a power source specific to the test block (42).

7. The input module according to claim 6, wherein the processing sub-module (24) is able to determine:
• an operating anomaly of at least one of the elements of the group made up of one or both interfaces (40A, 40B) and/or the test block (42) and/or the isolating part (44) when the output state (40A6, 40B6) of at least one interface (40A, 40B) differs from the forcing state whereas the state imposed by the test block (42) is the forcing state,
• an absence of operating anomaly when the test block (42) is not powered on, and
• an operating anomaly of at least one of the elements of the group made up of the interfaces (40A, 40B) and the test block (42) when the output state (40A6, 40B6) of at least one interface (40A, 40B) differs from the low state whereas the state imposed by the test block (42) is the low state.

8. The input module according to any one of claims 1 to 7, wherein the processing sub-module is able to cyclically impose the forcing state, the low state, then the read state at each output (40A6, 40B6) of each interface (40A, 40B).

9. A programmable logic controller (10) including at least one input module (32) according to any one of claims 1 to 8.

10. A testing method for an input module (32) for a programmable logic controller able to be connected to a plurality of elements of an automated chain, the input module (32) comprising:
- inputs (32A, 32B), each input (32A, 32B) being able to receive the signal from at least one element (14A, 14B) of the plurality of elements (12, 14, 16, 18, 20A, 20B, 20C, 20D),
- interfaces (40A, 40B), each interface (40A, 40B) being associated with a single input and comprising at least one output (40A6, 40B6) able to operate in three different states:
∘ a forcing state corresponding to the maximum voltage that the output (40A6, 40B6) of the interface (40A, 40B) is able to deliver,
∘ a low state corresponding to the minimum voltage that the output (40A6, 40B6) of the interface (40A, 40B) is able to deliver, and
∘ a read state in which the output (40A6, 40B6) of the interface (40A, 40B) is able to deliver an image of the signal received by the input (32A, 32B) associated with the considered interface (40A, 40B),
- a test block (42) connected to each of the interfaces (40A, 40B) and able to impose the state of the output (40A6, 40B6) of each interface (40A, 40B), and
- a processing sub-module (24) able to compare the state of the output (40A6, 40B6) of each interface (40A, 40B) with the state imposed by the test block (42) and to deduce an operating anomaly of the input module (32, 34) therefrom when the state of the output (40A6, 40B6) of at least one interface (40A, 40B) differs from the state imposed by the test block (42),
the method comprising the following steps:
- imposing a forcing state on each output (40A6, 40B6) of each interface (40A, 40B),
- verifying the operating state of the input module (32) when a forcing state is imposed on each output (40A6, 40B6) of each interface (40A, 40B),
- imposing a low state on each output (40A6, 40B6) of each interface (40A, 40B),
- verifying the operating state of the input module (32) when a low state is imposed on each output (40A6, 40B6) of each interface (40A, 40B), and
- deducing the operating state of the first input module (32) based on the results of the verification steps.
